# EUROPEAN PATENT APPLICATION

(11) **EP 2 768 068 A1**
(43) Date of publication of application: **20.08.2014**
(21) Application number: 12840729.3
(22) Date of filing: 07.09.2012
(51) Int. Cl.: H01M 10/12, H01M 2/16, H01M 4/56

(54) **VALVE-REGULATED LEAD-ACID BATTERY**

(30) Priority: 14.10.2011 JP 2011227469
(71) Applicant: GS Yuasa International Ltd., Kisshoin, Minami-ku, Kyoto-shi, Kyoto 601-8520 (JP)
(72) Inventor: SAWA, Aya, Kyoto-shi Kyoto 601-8520 (JP); NAKAYAMA, Yasuhide, Kyoto-shi Kyoto 601-8520 (JP)
(74) Representative: Isarpatent
(86) International application number: PCT/JP2012/005694
(87) International publication number: WO 2013/054467

(57) **Abstract**

There is provided a valve regulated lead-acid battery excellent in low-temperature high-rate discharge performance. The valve regulated lead-acid battery of the present invention is a valve regulated lead-acid battery including an element made up of positive electrode plates retaining a positive active material, negative electrode plates retaining a negative active material, and separators, wherein an average pore diameter of the negative active material measured by a bubble point method is 0.2 to 0. 35 µm, and an average pore diameter of the separator similarly measured by the bubble point method is 10 to 40 times as large as the average pore diameter of the negative active material.

## Description

### TECHNICAL FIELD

This invention relates to a valve regulated lead-acid battery.

### BACKGROUND ART

An all-terrain type vehicle is a motorized vehicle that can travel in various terrains including uneven ground, and is generally called a buggy.

Since the above-described all-terrain type vehicle is often used in harsh environments such as a cold district under an environment of -25°C, a valve regulated lead-acid battery for use in the all-terrain type vehicle has been required to be excellent in low-temperature high-rate discharge performance. Consequently, various approaches have been conducted in order to enhance the low-temperature high-rate discharge performance of the valve regulated lead-acid battery (Non-Patent Documents 1 and 2).

That is, in Non-Patent Document 1, in order to enhance the low-temperature high-rate discharge performance at - 25°C, attention is paid to an additive to a negative active material, so that the performance enhancement of about 23% has been achieved. Moreover, in Non-Patent Document 2, in addition to a technique described in Non-Patent Document 1, battery design is optimized, so that enhancement of about 50% in the low-temperature high-rate discharge performance at -25°C has been made successful.

### PRIOR ART DOCUMENTS

### NON-PATENT DOCUMENTS

Non-Patent Document 1: GS Yuasa Technical Report, Vol. 7, No. 1, June 2010
Non-Patent Document 2: GS Yuasa Technical Report, Vol. 7, No. 2, December 2010

### SUMMARY OF THE INVENTION

### PROBLEMS TO BE SOLVED BY THE INVENTION

Consequently, the present invention has been devised to provide a valve regulated lead-acid battery excellent in low-temperature high-rate discharge performance in light of the above-described situation.

### MEANS FOR SOLVING THE PROBLEMS

While the techniques described in Non-Patent Documents 1 and 2 have enhanced the low-temperature high-rate discharge performance at -25°C to a certain level, further enhancement of low-temperature high-rate discharge performance has been desired. Thus, as a result of further attention to a separator, and earnest investigation, the present inventors have found that when an average pore diameter of the separator measured by the bubble point method is a predetermined times as large as an average pore diameter of a negative active material measured by the bubble point method, an electrolyte solution volume distributed to the negative active material increases, and with this, low-temperature high-rate duration time at -25°C enhances, by which the present inventor has reached completion of the present invention.

The valve regulated lead-acid battery according to the present invention includes an element including a positive electrode plate which retains a positive active material, a negative electrode plate which retains a negative active material, and a separator. An average pore diameter of the negative active material measured by a bubble point method is 0.2 µm or more and 0.35 µm or less. An average pore diameter of the separator measured by the bubble point method is 10 to 40 times as large as the average pore diameter of the negative active material.

The average pore diameter of the separator is preferably 2.6 µm or more and 8.0 µm or less.

A thickness of the separator is preferably 1.0 µm or more and 1.6 µm or less.

The separator is preferably a non-woven fabric formed by a glass fiber.

Moreover, an average fiber diameter of the glass fiber is 4 µm or less.

### ADVANTAGES OF THE INVENTION

Since the present invention is configured as described above, the low-temperature high-rate discharge performance of the valve regulated lead-acid battery, particularly, the performance under the environment of -25°C can be enhanced, so that the valve regulated lead-acid battery preferable for an all-terrain type vehicle or the like can be obtained.

### BRIEF DESCRIPTION OF THE DRAWING

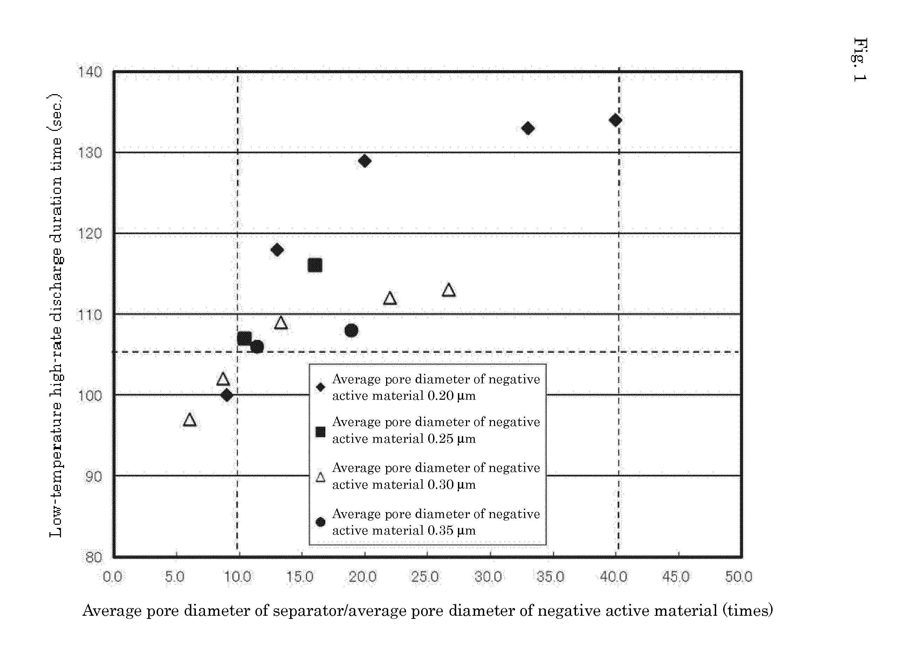

Fig. 1 depicts a graph showing a relationship between a ratio of an average pore diameter of a separator to an average pore diameter of a negative active material, and low-temperature high-rate discharge duration time.

### MODE FOR CARRYING OUT THE INVENTION

Hereinafter, an embodiment of a valve regulated lead-acid battery according to the present invention will be described.

The valve regulated lead-acid battery according to the present invention includes an element made up of positive electrode plates retaining a positive active material, negative electrode plates retaining a negative active material, and separators. The above-described valve regulated lead-acid battery includes, for example, a container with an upper portion thereof open, having one or more cell chambers inside, and the element is disposed in each of the cell chambers, wherein lug portions of the respective positive electrode plates are integrally joined by a strap for positive electrode, and lug portions of the respective negative electrode plates are integrally joined by a strap for negative electrode, so that the adjacent cells are connected by the heteropolar straps of the adjacent cell chambers. Moreover, a pole for positive electrode is provided so as to be projected in an opening direction of the container from the strap for positive electrode of the cell chamber at one end, while a pole for negative electrode is provided so as to be projected in the opening direction of the container from the strap for negative electrode at the other end. The positive electrode plate and the negative electrode plate are manufactured by filling a positive grid and a negative grid made of lead or a lead alloy with a positive active material paste and a negative active material paste, and causing the resultants to undergo a curing process and a drying process.

The opening of the container is closed by welding a container lid, which has an exhaust port serving as an electrolyte solution filling port as well, or causing the container lid to adhere thereto. Moreover, the pole for positive electrode and the pole for negative electrode are inserted into hole portions for receiving the pole for positive electrode and the pole for negative electrode, which hole portions are provided in the container lid, to make a positive electrode terminal and a negative electrode terminal, or the pole for positive electrode and the pole for negative electrode are welded to a positive electrode terminal member and a negative electrode terminal member, which have been cast in advance in an upper portion of the container lid, to make the positive electrode terminal and the negative electrode terminal. Thereby, the respective terminals are formed, and a complete battery is produced. The exhaust port serving as the electrolyte solution filling port as well includes an exhaust valve for exhausting oxygen gas generated from the element outside.

In the valve regulated lead-acid battery according to the present invention, an average pore diameter of the negative active material is 0.2 to 0.35 µm, and an average pore diameter of the separator is 10 to 40 times as large as the average pore diameter of the negative active material. In the present invention, the average pore diameter of the negative active material and the average pore diameter of the separator are measured, using a bubble point method. The bubble point method can be carried out in conformity with BCI 03A-6. When the average pore diameter of the negative active material is 0.2 to 0.35 µm, and the average pore diameter of the separator is 10 to 40 times as large as the average pore diameter of the negative active material, a capillary phenomenon accompanying surface tension allows an electrolyte solution to be efficiently absorbed into the negative active material from the separator. Thus, it is presumed that this increases an electrolyte solution volume distributed to the negative active material, leading to the enhancement of the low-temperature high-rate discharge performance.

The average pore diameter of the negative active material is generally measured, using a mercury press-in method (JIS K1150). The mercury press-in method is a method of pressing mercury into pores of a solid sample by pressurizing to measure a pore diameter distribution and the average pore diameter of the solid sample. As a pressure applied to the mercury is gradually increased, the mercury sequentially penetrates from larger pores to smaller pores, by which the pore diameter distribution and the average pore diameter can be found from a relationship between the applied pressure and a volume of the mercury.

In contrast, when the average pore diameters of the separator and the negative active material are measured by the bubble point method (BCI 03A-6), the pore diameter to be measured is only that of a neck portion of each of the through-holes, which limits permeability of the liquid.

Values measured by the bubble point method have no correlation with values measured by the mercury press-in method. For example, as described in JP-A-2006-95352, depending on a shape of the through-holes, values measured by the bubble point method have no correlation with values measured by the mercury press-in method. Taking the average pore diameter of the negative active material as an example, even if a value measured by the bubble point method is a certain value, a value measured by the mercury press-in method is not necessarily settled to one value, but to various values, depending on the shape of the through-holes.

Accordingly, it is said that the average pore diameter measured by the mercury press-in method, and the average pore diameter measured by the bubble point method are separate parameters to measure completely different areas, and have no correlation, and cannot be simply converted, using a coefficient value or the like. As described above, since it is considered that the movement of the electrolyte solution from the separator to the negative active material is due to the capillary phenomenon, and it is also considered that the low-temperature high-rate discharge performance is in correlation to distribution of the electrolyte solution to the negative active material. Therefore, in the case where a purpose is to enhance the low-temperature high-rate discharge performance, it is considered that using, as indexes, the average pore diameters obtained by the bubble point method of measuring the average pore diameters only from the neck portions of the through-holes, which limit the permeability of the liquid, enables more proper evaluation. Furthermore, in the valve regulated lead-acid battery, the oxygen gas generated from the positive electrode plate moves to the negative electrode plate, and causes gas absorption reaction in which the oxygen gas reacts with the hydrogen gas, and from this point as well, it is considered to be appropriate to use, as the indexes, the average pore diameters by the bubble point method of measuring the through-holes.

On the other hand, if numeral value ranges of the average pore diameters of the separator and the negative active material that bring about the above-described effect are measured, using the mercury press-in method, space portions that are not the through-holes are included in measurement objects. Thus, when there are a lot of space portions that are not the through-holes, a numeral value range in which the above-described enhancement in performance is not obtained is likely to be included. Accordingly, the mercury press-in method is inappropriate as the method for measuring the average pore diameters of the separator and the negative active material that brings about the above-described effect.

The average pore diameter of the separator used in the present invention is preferably 2. 6 to 8.0 µm. If the average pore diameter is less than 2.6 µm, it is difficult in view of manufacturing to set the average pore diameter of the negative active material retained by the negative electrode plate to 1/40 to 1/10. Moreover, data of average pore diameter less than 0.2 µm of the negative active material cannot be measured at the time of this application. Furthermore, when the average pore diameter of the separator exceeds 8.0 µm, stratification that specific gravity of the electrolyte solution increases from top down, or dendrite short is likely to occur, and other performances different from the effect of the present invention, such as charge acceptability, life performance and the like, deteriorate.

As the separator, a separator formed of glass fiber is preferably used, and above all, an AGM (absorptive glass mat) separator that is formed of glass fiber having an average fiber diameter of 4 µm or less (micro glass wool), and is wet-laid nonwoven fabric having a thickness of 1.0 to 1.6 µm is more preferable. Since the AGM separator has high resistance to oxidation and uniform ultramicropores in addition to excellent elasticity, exfoliation of the active material is prevented, the electrolyte solution is retained in a favorable state, and the gas generated in the positive electrode plate can be quickly moved to, and absorbed in the negative electrode plate.

For the improvement of the low-temperature high-rate discharge performance of the valve regulated lead-acid battery, countermeasures such as narrowing an interval between the positive electrode plate and the negative electrode plate (hereinafter, referred to a distance between electrodes as well) and changing a configuration of the number of plates by making the positive electrode plate and the negative electrode plate thinner are generally taken. However, according to the present invention, the low-temperature high-rate discharge performance can be enhanced without changing the distance between the electrodes and the configuration of the number of plates.

### EXAMPLES

Hereinafter, the present invention will be described in more detail with examples, but the present invention is not limited to only these examples.

### <Test 1> Evaluation of low-temperature high-rate discharge performance

As the separators, AGM separators in which a thickness measured in conformity with SBA S 0401 was 0.7 to 1.5 mm were used. As the negative electrode plates, plates each having a size of width 76 mm × height 87 mmH × thickness 1.50 mm were used, and as the positive electrodes, plates each having a size of width 76 mm × height 87 mm × thickness 1.95 mm were used. The average pore diameters of the separators and the negative plates were measured by the bubble point method carried out in conformity with BCI 03A-6, using a porous-material automatic pore measuring system (made by Porous Materials, Inc.) including a palm porometer.

The above-described separators, negative electrode plates, and positive electrode plates were combined, and a 12 V valve regulated lead-acid battery having a plate configuration of the four sheets of positive electrodes and five sheets of negative electrodes was manufactured.

Discharge duration time was examined as the low-temperature high-rate discharge performance in accordance with the following test conditions, using the manufactured valve regulated lead-acid battery.
Discharge current: 100A
Cut-off condition: 6.0 V
Test temperature: -25°C

Obtained results are shown in tables 1 to 3. In tables 1 to 3, "Enhancement effect of low-temperature high-rate discharge duration time" was relatively evaluated with the low-temperature high-rate discharge duration time of a sample of No. 1 used as a reference, and if an enhancement rate of the low-temperature discharge duration time to the discharge duration time of the sample of No. 1 was less than 5%, it was evaluated that the enhancement effect was "Δ" and if the enhancement effect was 5% or more, it was evaluated that the enhancement effect was "O". Moreover, Fig. 1 shows relationships between a ratio of the average pore diameter of the separator to the average pore diameter of the negative active material, and the low-temperature high-rate discharge duration time, which are parts of the results shown in table 1.

**Table 1**

| No. | Average pore diameter of separator (µm) | Thickness of separator (mm) | Average pore diameter of negative active material (µm) | Average pore diameter of separator/average pore diameter of negative active material (times) | Low-temperature high-rate discharge duration time (-25°) (seconds) | Enhancement effect of low-temperature high-rate discharge duration time |
|---|---|---|---|---|---|---|
| 1 | 1.8 | 1.1 ± 0.1 | 0.20 | 9.00 | 100 | - |
| 2 | | | 0.30 | 6.00 | 95 | × |
| 3 | | | 0.35 | 5.14 | 85 | × |
| 4 | 2 | | 0.20 | 10.00 | 105 | ○ |
| 5 | | | 0.25 | 8.00 | 99 | × |
| 6 | | | 0.30 | 6.67 | 90 | × |
| 7 | | | 0.35 | 5.71 | 85 | × |
| 8 | 2.5 | | 0.20 | 12.50 | 110 | ○ |
| 9 | | | 0.25 | 10.00 | 105 | ○ |
| 10 | | | 0.30 | 8.33 | 100 | × |
| 11 | | | 0.35 | 7.14 | 95 | × |
| 12 | 2.6 | | 0.20 | 13.00 | 118 | ○ |
| 13 | | | 0.25 | 10.40 | 112 | ○ |
| 14 | | | 0.30 | 8.67 | 104 | Δ |
| 15 | | | 0.35 | 7.43 | 102 | × |
| 16 | 4 | | 0.20 | 20.00 | 129 | ○ |
| 17 | | | 0.25 | 16.00 | 125 | ○ |
| 18 | | | 0.30 | 13.30 | 122 | ○ |
| 19 | | | 0.35 | 11.40 | 120 | ○ |
| 20 | 6.6 | | 0.20 | 33.00 | 133 | ○ |
| 21 | | | 0.30 | 22.00 | 131 | ○ |
| 22 | | | 0.35 | 18.90 | 128 | ○ |
| 23 | 8 | | 0.20 | 40.00 | 134 | ○ |
| 24 | | | 0.30 | 26.70 | 130 | ○ |
| 25 | | | 0.35 | 22.86 | 128 | ○ |

**Table 2**

| No. | Average pore diameter of separator (µm) | Thickness of separator (mm) | Average pore diameter of negative active material (µm) | Average pore diameter of separator/average pore diameter of negative active material (times) | Low-temperature high-rate discharge duration time (-25°) (seconds) | Enhancement effect of low-temperature high-rate discharge duration time |
|---|---|---|---|---|---|---|
| 1 | 1.6 | 1.5 ± 0.1 | 0.20 | 8.00 | 101 | Δ |
| 2 | | | 0.25 | 6.40 | 96 | × |
| 3 | | | 0.30 | 5.33 | 90 | × |
| 4 | | | 0.35 | 4.57 | 85 | × |
| 5 | 2 | | 0.20 | 10.00 | 107 | ○ |
| 6 | | | 0.25 | 8.00 | 102 | Δ |
| 7 | | | 0.30 | 6.67 | 98 | × |
| 8 | | | 0.35 | 5.71 | 95 | × |
| 9 | 2.6 | | 0.20 | 13.00 | 109 | ○ |
| 10 | | | 0.25 | 10.40 | 106 | ○ |
| 11 | | | 0.30 | 8.67 | 103 | Δ |
| 12 | | | 0.35 | 7.43 | 100 | × |
| 13 | 3 | | 0.20 | 15.00 | 110 | ○ |
| 14 | | | 0.30 | 10.00 | 105 | ○ |
| 15 | | | 0.35 | 8.57 | 103 | Δ |
| 16 | 5.6 | | 0.20 | 28.00 | 113 | ○ |
| 17 | | | 0.30 | 18.67 | 110 | ○ |
| 18 | | | 0.35 | 16.00 | 109 | ○ |
| 19 | 8 | | 0.20 | 40.00 | 115 | ○ |
| 20 | | | 0.30 | 26.67 | 112 | ○ |
| 21 | | | 0.35 | 22.86 | 111 | ○ |

**Table 3**

| No. | Average pore diameter of separator (µm) | Thickness of separator (mm) | Average pore diameter of negative active material (µm) | Average pore diameter of separator/average pore diameter of negative active material (times) | Low-temperature high-rate discharge duration time (-25°) (seconds) | Enhancement effect of low-temperature high-rate discharge duration time |
|---|---|---|---|---|---|---|
| 1 | 6 | 0.7 ± 0.1 | 0.20 | 30.00 | 131 | ○ |
| 2 | | | 0.30 | 20.00 | 108 | ○ |

According to results shown in tables 1 to 3 and Fig. 1, while influence on the low-temperature high-rate discharge duration time differed depending on the average pore diameter of the negative active material, when the average pore diameter of the separator was 10 times or more than the average pore diameter of the negative active material, the low-temperature high-rate discharge duration time enhanced by 5% or more with respect to the low-temperature high-rate discharge duration time of the sample of No. 1.

Whichever thickness the separator had, when the average pore diameter of the separator was 10 times or more than the average pore diameter of the negative active material, the low-temperature high-rate discharge duration time enhanced by 5% or more with respect to the low-temperature high-rate discharge duration time of the sample of No. 1. It was, however, found that when the average pore diameter of the separator became 30 times or more than the average pore diameter of the negative active material, an increment of the enhancement effect of the low-temperature high-rate discharge performance became small.

## Claims

1. A valve-regulated lead acid battery comprising:
an element including a positive electrode plate which retains a positive active material, a negative electrode plate which retains a negative active material, and a separator,
wherein an average pore diameter of the negative active material measured by a bubble point method is 0.2 µm or more and 0.35 µm or less, and
an average pore diameter of the separator measured by the bubble point method is 10 to 40 times as large as the average pore diameter of the negative active material.

2. The valve-regulated lead acid battery according to claim 1, wherein the average pore diameter of the separator is 2.6 µm or more and 8.0 µm or less.

3. The valve-regulated lead acid battery according to claim 1 or 2, wherein a thickness of the separator is 1.0 µm or more and 1.6 µm or less.

4. The valve-regulated lead acid battery according to any one of claims 1 to 3, wherein the separator is a non-woven fabric formed by a glass fiber.

5. The valve-regulated lead acid battery according to claims 4, wherein an average fiber diameter of the glass fiber is 4 µm or less.
